# EUROPÄISCHE PATENTSCHRIFT

(11) **EP 3 350 011 B1**
(45) Veröffentlichungstag und Bekanntmachung des Hinweises auf die Patenterteilung: **27.02.2019**
(21) Anmeldenummer: 16738793.5
(22) Anmeldetag: 14.07.2016
(51) Int. Cl.: B60K 15/04, B60K 13/04, B60K 15/03

(54) **EINFÜLLSTUTZEN FÜR EINEN FLÜSSIGKEITSBEHÄLTER EINES KRAFTFAHRZEUGS SOWIE ÜBERTANKUNGS- UND FEHLBETANKUNGSSCHUTZ FÜR EINEN FLÜSSIGKEITSBEHÄLTER EINES KRAFTFAHRZEUGS UND VERFAHREN ZUR STEUERUNG EINER BETANKUNGS- UNTERBRECHUNGSAUTOMATIK AN EINEM ZAPFVENTIL**
FILLER PIPE FOR A LIQUID CONTAINER OF A MOTOR VEHICLE, OVERFILL- AND MISFUEL-PROTECTION FOR A LIQUID CONTAINER OF A MOTOR VEHICLE, AND METHOD FOR CONTROLLING AN AUTOMATIC FILLING INTERRUPTION OF A FILLING NOZZLE
TUBULURE DE REMPLISSAGE POUR UN RÉSERVOIR DE LIQUIDE D'UN VÉHICULE AUTOMOBILE, PROTECTION CONTRE UNE SURCHARGE DU RÉSERVOIR ET CONTRE UNE REMPLISSAGE D'UN CARBURANT FAUX POUR UN RÉSERVOIR DE LIQUIDE D'UN VÉHICULE AUTOMOBILE, ET PROCÉDÉ DE COMMANDE D'UNE INTERRUPTION AUTOMATIQUE DE REMPLISSAGE D'UN PISTOLET DE REMPLISSAGE

(30) Priorität: 15.09.2015 DE 102015217606
(43) Veröffentlichungstag der Anmeldung: 25.07.2018
(73) Patentinhaber: Kautex Textron GmbH & Co. KG, 53229 Bonn (DE)
(72) Erfinder: WOLF, Hartmut, 53639 Königswinter (DE); SPIEKERMANN, Nils, 53175 Bonn (DE)
(74) Vertreter: Richly & Ritschel Patentanwälte PartG mbB
(86) Internationale Anmeldenummer: PCT/EP2016/066787
(87) Internationale Veröffentlichungsnummer: WO 2017/045800

(56) Entgegenhaltungen:
- EP-A2- 1 253 410
- DE-A1-102011 009 745
- DE-A1-102014 002 805
- US-A1- 2014 190 591

## Beschreibung

Die Erfindung betrifft einen Einfüllstutzen für einen Flüssigkeitsbehälter eines Kraftfahrzeugs, der wenigstens einen Teil eines Einfüllkanals des Flüssigkeitsbehälters bildet und der einen Mundlochstutzenabschnitt mit einem Mundloch zu Aufnahme eines Zapfventils aufweist. Die Erfindung betrifft weiterhin einen Übertankungs- und Fehlbetankungsschutz für einen Flüssigkeitsbehälter eines Kraftfahrzeugs, welcher zur Betankung mittels eines automatisch abschaltenden Zapfventils mit einer Betankungs- Unterbrechungsautomatik ausgebildet ist, umfassend eine behälterseitige Sicherungskomponente und eine säulenseitige Sicherungskomponente an dem Zapfventil.

Säulenseitig im Sinne der vorliegenden Anmeldung bedeutet, dass eine Sicherungskomponente auf Seiten einer Zapfsäule an dem Zapfventil vorgesehen ist, welches Bestandteil der Zapfsäule ist.

Die Erfindung betrifft weiterhin ein Verfahren zur Steuerung einer Betankungs-Unterbrechungsautomatik an einem Zapfventil bei der Betankung eines Flüssigkeitsbehälters in einem Kraftfahrzeug.

Flüssigkeitsbehälter in einem Kraftfahrzeug, die zur Betankung mittels eines Zapfventils ausgebildet sind, sind beispielsweise Kraftstoffbehälter oder Additivbehälter zur Aufnahme eines flüssigen Additivs für die selektive katalytische Abgasentstickung. Solche Behälter sind in der Regel Harnstoffbehälter zur Einspritzung von Harnstoff in dem Abgasstrang des Kraftfahrzeugs stromaufwärts vor einem Katalysator zur Stickstoffreduktion.

Bei der Betankung solcher Flüssigkeitsbehälter mittels eines Zapfventils erfolgt in der Regel eine automatische Abschaltung des Zapfventils über den in dem Einfüllkanal des Flüssigkeitsbehälters ansteigenden Flüssigkeitsspiegel, der eine sogenannte Schnüffelbohrung des Zapfventils verschließt. Das Zapfventil wird umgangssprachlich auch als "Zapfpistole" bezeichnet und ist über einen Schlauch mit der Zapfsäule verbunden. Bei einer Zapfventilautomatik bzw. bei einer sogenannten Betankungs- Unterbrechungsautomatik erzeugt die aus dem Zapfventil auslaufende Flüssigkeit einen Unterdruck, der über eine Fühlerleitung detektiert wird. An der Mündung des Zapfventils öffnet sich die Fühlerleitung in eine sogenannte Fühlerdüse, die im Allgemeinen auch als Schnüffelbohrung bezeichnet wird. Wenn Flüssigkeit die Fühlerdüse am Auslauf des Zapfventils bedeckt, baut sich in der Fühlerleitung ein Unterdruck auf, der eine Unterbrechung des Betankungsvorgangs verursacht.

Die Wirkungsweise einer solchen Betankungs- Unterbrechungsautomatik hat zwangsläufig zur Folge, dass bei der Betankung immer der Anstieg der Flüssigkeit in Einfüllkanal in Kauf genommen werden muss. Das kann insbesondere bei hohen Betankungsgeschwindigkeiten problematisch sein, weil die Flüssigkeit im Einfüllkanal bzw. im Einfüllrohr schnell nach oben steigt und dort als Schwall oder mit Spritzern nach Außen gelangen kann, bevor das Zapfventil abschaltet. Um das Herausspritzen von Kraftstoff oder anderen Flüssigkeiten zu verhindern ist es bekannt, in dem Einfüllstutzengehäuse ein Entlüftungslabyrinth vorzusehen und das Gehäuse querschnittlich so zu gestalten, dass Platz für die schnell hochsteigende Flüssigkeit geschaffen wird. Eine solche Geometrie ist beispielsweise aus der DE 2011 009 745 A1, die die Merkmale des Oberbegriffs des Anspruchs 1 zeigt, für den Einfüllstutzen eines Harnstoffbehälters bekannt.
Bei der Betankung von Kraftstoffbehältern ist üblicherweise ein Ausgleichsvolumen innerhalb des Kraftstoffbehälters freizuhalten. Um dies zu gewährleisten, sind Kraftstoffbehälter mit Füllstandsbegrenzungsventilen ausgestattet. Wenn die Füllstandsbegrenzungsventile und gegebenenfalls andere Entlüftungsventile am Kraftstoffbehälter geschlossen werden, dann steigt der Tankinnendruck relativ schnell an, was dazu führt, dass die Kraftstoffsäule im Einfüllkanal des Einfüllstutzens hochsteigt. Durch den plötzlich ansteigenden Tankinnendruck kann sich der Tank unter Umständen aufblähen, womit sich das Tankvolumen vergrößert, sodass entsprechend nachgetankt werden kann, obwohl der Tank schon mit seinem Nennvolumen befüllt wurde. Für solche Betriebszustände ist es unter Umständen notwendig, den Tankkörper zusätzlich auszusteifen.
Da heutzutage Flüssigkeitsbehälter für Kraftfahrzeuge, seien es Kraftstoffbehälter oder Additivbehälter, aus thermoplastischem Kunststoff ausgebildet sind, führt ein erhöhter Tankinnendruck verhältnismäßig leicht zur einer temporären Vergrößerung des Tankvolumens, was aus den zuvor erwähnten Gründen jedenfalls nicht wünschenswert ist.
Der Erfindung liegt daher die Aufgabe zugrunde, einen Einfüllstutzen für einen Flüssigkeitsbehälter eines Kraftfahrzeugs bereit zu stellen, mit welchem es einfach möglich ist, den Betankungsvorgang in kontrollierter Art und Weise zu beenden.
Der Erfindung liegt weiterhin die Aufgabe zugrunde, einen Übertankungs- und Fehlbetankungsschutz für einen Flüssigkeitsbehälter eines Kraftfahrzeugs bereitzustellen, mit dem eine kontrollierte Beendung des Betankungsvorgangs möglich ist.
Schließlich liegt der Erfindung die Aufgabe zugrunde, ein Verfahren zur Steuerung einer Betankungs- Unterbrechungsautomatik an einem Zapfventil bereitzustellen.
Die vorstehend genannten Aufgaben werden gelöst durch die Merkmale der unabhängigen Ansprüche.
Vorteilhafte Ausgestaltungen der Erfindung ergeben sich aus den Unteransprüchen.
Ein Gesichtspunkt der Erfindung betrifft einen Einfüllstutzen für einen Flüssigkeitsbehälter eines Kraftfahrzeugs, der wenigstens einen Teil eines Einfüllkanals des Flüssigkeitsbehälters bildet und der einen Mundlochstutzenabschnitt mit einem Mundloch zur Aufnahme eines Zapfventils aufweist, wobei der Einfüllstutzen sich dadurch auszeichnet, dass der Mundlochstutzenabschnitt eine Schalteinrichtung zur Betätigung einer Betankungs- Unterbrechungsautomatik an einem in dem Mundlochstutzenabschnitt eingeführten Zapfventil im Sinne der Unterbrechung des Betankungsvorgangs aufweist, wobei die Schalteinrichtung über einen elektrischen Schaltstromkreis betätigbar ist.

Auf diese Art und Weise lässt sich ein Abschaltvorgang bzw. eine Unterbrechung des Betankungsvorgangs aktiv einleiten und zwar über einen Schaltvorgang, der beispielsweise über die Bordelektronik des Kraftfahrzeugs gesteuert werden kann. Die Steuerung einer Abschaltroutine kann beispielsweise durch eine kontinuierliche Auswertung des Füllstandes des Flüssigkeitsbehälters erfolgen. Alternativ oder zusätzlich kann der Innendruck des Flüssigkeitsbehälters ausgewertet werden. Schließlich ist es möglich, den richtigen Abschaltzeitpunkt zu errechnen bzw. vorzubestimmen, beispielsweise über eine ermittelte Steiggeschwindigkeit des Flüssigkeitspegels innerhalb des Flüssigkeitsbehälters oder über eine Ermittlung des Betankungsvolumenstroms und einem Vergleich des bereits betankten Volumens mit dem zur Verfügung stehenden Zutankvolumen.

Der Einfüllstutzen gemäß der Erfindung kann als Kunststoffbauteil zur Verbindung mit einem Flüssigkeitsbehälter aus Kunststoff ausgebildet sein. Alternativ kann der Einfüllstutzen gemäß der Erfindung als integraler Bestandteil eines Flüssigkeitsbehälters ausgebildet sein, der vorzugsweise als Flüssigkeitsbehälter aus thermoplastischen Kunststoff ausgebildet ist.

Die Schalteinrichtung gemäß der Erfindung kann beispielsweise mit einem integrierten Fehlbetankungsschutz an im Markt verfügbaren Zapfventilen zusammenwirken. Bei Zapfventilen für Additive zur Abgasentstickung ist häufig als Schutz gegen Fehlbetankung ein integrierter Magnetschalter vorgesehen. Eine Betankung ist erst möglich, wenn der Magnetschalter durch ein Magnetfeld geöffnet wird. Es ist deshalb besonders zweckmäßig, wenn die Schalteinrichtung gemäß der Erfindung mindestens einen Elektromagneten umfasst, der am Umfang des Mundlochstutzenabschnitts so angeordnet ist, dass das von diesem erzeugte Magnetfeld sich in den Querschnitt des Mundlochstutzenabschnitts im Bereich der Umschließung des Zapfventils erstreckt, sodass dieses auf einen ferromagnetischen Ventilkörper eines Fehlbetankungsschutzes an dem Zapfventil betätigend einwirken kann.

Erfindungsgemäß kann beispielsweise vorgesehen sein, dass der Elektromagnet in bestromtem Zustand den Betankungsvorgang am Zapfventil freigibt. Wird der Schaltstromkreis unterbrochen, so ist dann auch der Betankungsvorgang unterbrochen.

Dazu ist es zweckmäßig, wenn der Schaltstromkreis bei einer Einleitung des Betankungsvorgangs geschlossen ist.

Dies kann beispielsweise durch einen mechanischen Schalter zum Schließen des Schaltstromkreises bei Einleitung des Betankungsvorgangs vorgesehen sein. Ein solcher Schalter kann beispielsweise über eine entsprechende Mechanik an einem Deckelverschluss des Einfüllstutzens oder über einen Schalter erfolgen, der über eine Tankklappe betätigt wird, die eine Mulde für den Mundlochstutzenabschnitt des Einfüllstutzens in der Karosserie des Kraftfahrzeuges abdeckt. Schließlich kann der Schaltstromkreis auch über einen Schalter geschlossen werden, der durch das Zapfventil bei Einführung in den Mundlochstutzenabschnitt betätigt wird.

Bei einer besonders zweckmäßigen Variante des Einfüllstutzens gemäß der Erfindung ist eine Steuereinrichtung zur Unterbrechung des Schaltstromkreises in Abhängigkeit eines Füllstandssignals und/oder in Abhängigkeit eines Behälterinnendrucksignals und/oder in Abhängigkeit eines bei der Betankung ermittelten Füllvolumenstroms und/oder in Abhängigkeit eines Qualitätssignals eines Qualitätssensors vorgesehen. Die Steuereinrichtung kann einen oder mehrere Steuereingänge und wenigstens einen Schaltausgang aufweisen. Im einfachsten Fall kann der Abschaltvorgang durch einen Füllstandsgebersignal eingeleitet werden, dass an einem Steuereingang der Steuereinrichtung anliegt und einen Schaltvorgang im Sinne einer Unterbrechung des Schaltstromkreises einleitet.

In dem Einfüllstutzen oder etwas weiter stromabwärts in dem Einfüllkanal kann ein Qualitätssensor zur Detektion der beim Betankungsvorgang in den Einfüllstutzen eingeleiteten Flüssigkeit vorgesehen sein. Ein solcher Qualitätssensor kann beispielsweise detektieren, ob eine Flüssigkeit auf wässriger Basis oder eine Flüssigkeit auf Kohlenwasserstoffbasis betankt wird. Im Falle der Fehlbetankung, das heißt beispielsweise beim Einfüllen von Kraftstoff in einen Additivbehälter oder bei Einfüllen von Additiv in einen Kraftstoffbehälter, kann der Sensor ein Steuersignal erzeugen, das ebenfalls eine Unterbrechung des Schaltstromkreises und somit eine Abschaltung des Betankungsvorgangs bewirkt.

Die Schalteinrichtung kann mehrere am Umfang des Mundlochstutzenabschnitts angeordnete Elektromagnete umfassen, die beispielsweise gleichzeitig bestrombar sind, um sicherzustellen, dass die Freigabe und das Abschalten des Betankungsvorgangs auch bei einer nicht exakt gewählten Ausrichtung des Zapfventils im Mundlochstutzenabschnitt funktioniert.

Beispielsweise kann auch vorgesehen sein, dass ein oder mehrere Schalteinrichtungen bzw. Elektromagnete am Umfang des Mundlochstutzenabschnitts schwimmend gelagert sind, sodass in jedem Fall ein Zusammenwirken der Schalteinrichtung mit dem Ventilkörper des Fehlbetankungsschutzes im Zapfventil gewährleistet ist.

Ein weiterer Gesichtspunkt der Erfindung betrifft einen Übertankungs- und Fehlbetankungsschutz für einen Flüssigkeitsbehälter eines Kraftfahrzeugs, welcher zur Betankung mittels eines automatisch abschaltenden Zapfventils mit einer Betankungs- Unterbrechungsautomatik ausgebildet ist, umfassend eine behälterseitige Sicherungskomponente und eine säulenseitige Sicherungskomponente an dem Zapfventil, wobei als behälterseitige Sicherungskomponente wenigstens eine an einem Einfüllstutzen des Flüssigkeitsbehälters vorgesehene Schalteinrichtung und als säulenseitige Sicherungskomponente an dem Zapfventil ein von der Schalteinrichtung steuerbares Ventil vorgesehen ist, wobei als Schalteinrichtung wenigstens ein steuerbarer Elektromagnet vorgesehen ist, der Elektromagnet am Umfang des Einfüllstutzens so angeordnet ist, dass das von diesem für eine Betätigung erzeugte Magnetfeld sich in den Querschnitt des Einfüllstutzens in Bereich einer Einschublänge für das Zapfventil erstreckt, wobei das Ventil einen ferromagnetischen Ventilkörper aufweist, der in einer ersten Schaltstellung eine Fühlerleitung im Zapfventil verschließt und diese in einer zweiten Schaltstellung freigibt, wobei eine Betätigung des Elektromagneten im Sinne einer Bestromung über einen Schaltstromkreis den Ventilkörper in der zweiten, geöffneten Stellung hält.

Säulenseitig im Sinne der vorliegenden Erfindung bedeutet, dass die Sicherungskomponente an einer Zapfsäule oder einer Zapfeinrichtung vorgesehen ist. Das heißt, dass eine erste Sicherungskomponente an dem Flüssigkeitsbehälter des Kraftfahrzeugs und eine zweite Sicherungskomponente an der stationären Zapfeinrichtung beziehungsweise Zapfsäule vorgesehen ist. Die Begriffe "Zapfsäule" einerseits und "Zapfeinrichtung" andererseits werden hier synonym gebraucht.

Der vorstehend erwähnte Übertankungs- und Fehlbetankungsschutz umfasst vorteilhafterweise einen Einfüllstutzen mit einem oder mehreren der zuvor beschriebenen Merkmale.

Ein weiterer Gesichtspunkt der Erfindung betrifft ein Verfahren zur Steuerung einer Betankungs-Unterbrechungsautomatik an einem Zapfventil bei der Betankung eines Flüssigkeitsbehälters in einem Kraftfahrzeug mittels wenigstens einer in einem Einfüllstutzen des Flüssigkeitsbehälters vorgesehenen Schalteinrichtung, die betätigend auf eine Betankungs- Unterbrechungsautomatik eines in den Einfüllstutzen eingeführten Zapfventils einwirkt, wobei die Schalteinrichtung in Abhängigkeit von einem oder mehreren Steuersignalen gesteuert wird, die ausgewählt sind aus einer Gruppe umfassend ein Füllstandgebersignal, ein Drucksignal eines Drucksensors innerhalb des Flüssigkeitsbehälters oder ein gewähltes oder vorgegebenes oder abgeleitetes Füllmengensignal. Abgeleitet im Sinne der vorliegenden Erfindung bedeutet ein Signal, das beispielsweise aus einem Pegelanstieg oder aus anderen Umständen, beispielsweise unter Zuhilfenahme des Füllvolumenstroms, errechnet wurde. Die Abhängigkeit der Steuersignale von den zuvor erwähnten Parametern muss nicht unmittelbar sein, sondern diese kann beispielsweise mittelbar sein, über einen zwischengeschalteten Algorithmus, der in einer Steuereinrichtung hinterlegt ist.

Das Verfahren gemäß der Erfindung wird vorzugsweise unter Verwendung eines Einfüllstutzens oder einer Übertankungs- und Fehlbetankungsschutzeinrichtung mit einem der vorher beschriebenen Merkmale durchgeführt.

Der erfindungsgemäße Einfüllstutzen sowie der Übertankungs- und Fehlbetankungsschutz gemäß der Erfindung können an einem Kraftstoffbehälter sowohl als auch an einem Additivbehälter für ein Kraftfahrzeug vorgesehen sein. Ein Flüssigkeitsbehälter ausgestattet mit einem Einfüllstutzen gemäß der Erfindung kann ohne die sonst üblichen Füllstandsbegrenzungsventile ausgeführt sein. Das hat insbesondere den Vorteil, dass ein hermetisches Absperren des Füllvolumens zwecks Einleitung des Abschaltvorgangs nicht mehr erforderlich ist.

Bei vielen Kraftstoffbehältern gemäß Stand der Technik sind sowohl wenigstens ein Füllstandsbegrenzungsventil als auch mehrere sogenannte Betriebsentlüftungsventile vorgesehen. Das Füllstandsbegrenzungsventil kann durch den ansteigenden Flüssigkeitsspiegel im Behälter betätigt werden, die Betriebsentlüftungsventile müssen jedoch ebenfalls geschlossen werden, um einen Tankinnendruck aufbauen zu können. Diese Betriebsentlüftungsventile sind in der Regel höher im Tank als die Füllstandsbegrenzungsventile angeordnet, sodass jedenfalls Mittel zum Verschließen der Betriebsentlüftungsventile vorgesehen sein müssten.

Bei einer aktiven Unterbrechung des Betankungsvorgangs im Sinne der vorliegenden Erfindung sind solche Maßnahmen entbehrlich.

Die Erfindung wird nachstehen anhand von den in den Zeichnungen dargestellten Ausführungsbeispielen erläutert.

Es zeigen:
- Figur 1:: eine Schnittansicht durch einen Einfüllstutzen gemäß der Erfindung,
- Figur 2:: eine schematische Darstellung des Zapfventilrohrs eines Zapfventils,
- Figur 3:: eine schematische Darstellung eines in dem Einfüllstutzen angeordneten Elektromagneten,
- Figur 4:: eine Querschnittsansicht des Einfüllstutzens, die die Anordnung zweier Elektromagnete bezüglich des Zapfventilrohrs veranschaulicht,
- Figur 5:: eine Querschnittsansicht des Einfüllstutzens, die die Anordnung dreier Elektromagnete relativ zu dem Zapfventilrohr veranschaulicht und
- Figur 6:: eine schematische Ansicht eines Flüssigkeitsbehälters eines Kraftfahrzeugs mit einem Einfüllstutzen gemäß der Erfindung.

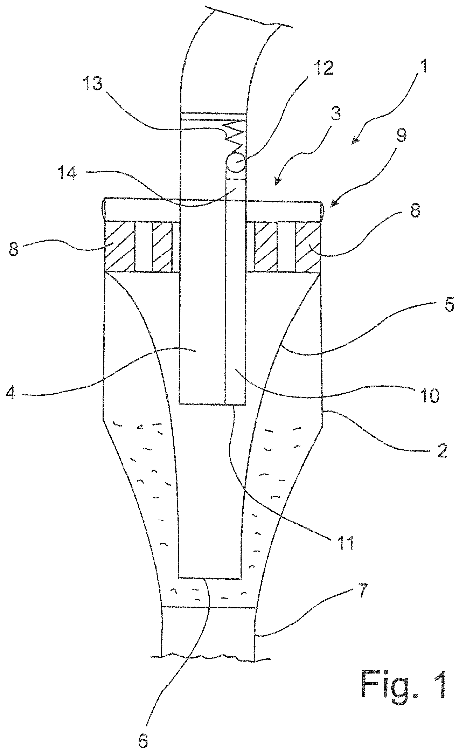

Ein Einfüllstutzen 1 für einen Flüssigkeitsbehälter eines Kraftfahrzeugs gemäß der Erfindung ist schematisch in Figur 1 dargestellt. Der Einfüllstutzen 1 umfasst einen trichterförmig aufgeweiteten Mundlochstutzenabschnitt 2 mit einem Mundloch 3 zur Aufnahme eines Zapfventilrohres 4 eines Zapfventils. Der Einfüllstutzen 1 gemäß der Erfindung ist stark vereinfacht schematisch dargestellt. Ein Bajonettverschluss oder ein Gewinde zur Aufnahme eines Deckelverschlusses ist in der Zeichnung beispielsweise nicht dargestellt.

Der Mundlochstutzenabschnitt 2 umfasst einen Führungstrichter 5 zur Aufnahme des Zapfventilrohrs 4 bei der Betankung des angeschlossenen und nicht dargestellten Flüssigkeitsbehälters. Der Führungstrichter 5 umfasst einen Auslauf 6, der in einen von einem Einfüllrohr 7 definierten Betankungskanal mündet.

In der Zeichnung ist der Einfüllstutzen 1 geöffnet dargestellt, wobei in das Mundloch 3 des Einfüllstutzens 1 das Zapfventilrohr 4 eines Zapfventils eingeführt ist.

Der Führungstrichter 5 bildet eine Aufnahmestruktur für das Zapfventilrohr 4, dass in der Zeichnung nicht vollständig in den Führungstrichter 5 eingeschoben ist.

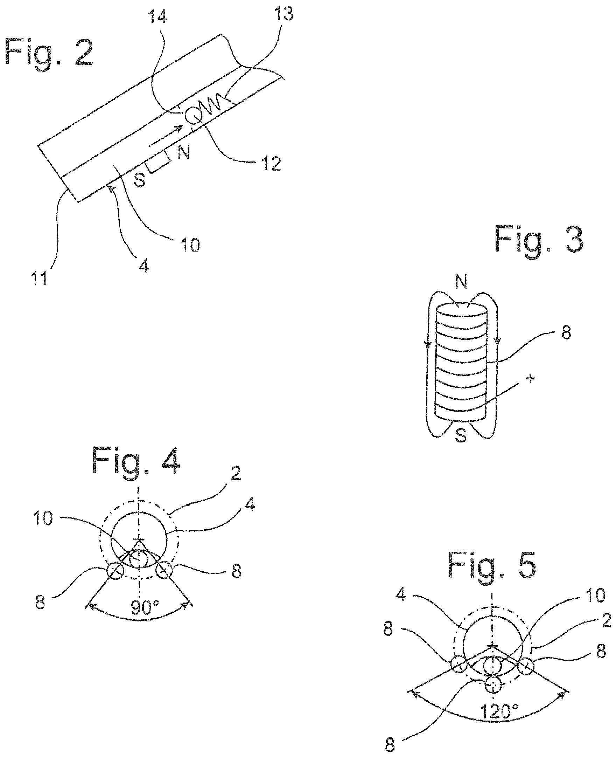

Innerhalb des Führungstrichters 5 kann ein Einschubbegrenzungsanschlag für das Zapfventilrohr 4 vorgesehen sein. Am Innenumfang des Mundlochstutzenabschnitts 2 sind zwei oder drei schaltbare Elektromagnete 8 vorgesehen, die so angeordnet sind, dass das von diesen erzeugte Magnetfeld, welches andeutungsweise in Figur 3 dargestellt ist, sich in den Querschnitt des Mundlochstutzenabschnitts 2 im Bereich der Umschließung des Zapfventils bzw. des Zapfventilrohres 4 erstreckt.

Die Erfindung ist so zu verstehen, dass die Anzahl der Elektromagnete 8 grundsätzlich nicht kritisch ist. Der Einfüllstutzen 1 gemäß der Erfindung kann einen, zwei, drei oder mehrere Elektromagnete 8 umfassen. Die Elektromagnete 8 können am Innenumfang des Mundlochstutzenabschnitts 2 als auch am Außenumfang des Mundlochstutzenabschnitts 2 vorgesehen sein. Diese sind vorzugsweise gegen die eindringende Flüssigkeit abgedichtet. Im vorliegenden Fall umfasst der Mundlochstutzenabschnitt ein trichterförmig erweitertes Mundlochstutzengehäuse 9 aus thermoplastischem Kunststoff, welches die Elektromagnete 8 und den Führungstrichter 5 aufnimmt. Das Mundlochstutzengehäuse 9 kann beispielsweise zur Aufnahme des oder der Elektromagnete 8 wenigstens eine flüssigkeitsdichte Kammer umfassen.

Die Figuren 4 und 5 veranschaulichen die Lage mehrer Elektromagnete 8 in Bezug auf das in den Mundlochstutzenabschnitt 2 eingeführte Zapfventilrohr 4. Bei der Variante des Einfüllstutzens 1 gemäß Figur 4 sind insgesamt zwei Elektromagnete 8 am Umfang des Mundlochstutzenabschnitts 2 auf einer Höhe mit einem Winkelabstand von 90 Grad zu einander angeordnet, bei der in Figur 5 dargestellten Variante des Einfüllstutzens gemäß der Erfindung sind am Umfang des Mundlochstutzenabschnitts 2 insgesamt drei Elektromagnete 8 mit gleichem Abstand zueinander angeordnet, wobei die äußeren Elektromagnete 8 einen Winkel von etwa 120 Grad zwischen sich einschließen, die Elektromagnete 8 also vorzugsweise jeweils mit einem Winkelabstand von 60 Grad zueinander angeordnet sind. Diese Anordnung der Elektromagnete 8 trägt der üblichen Ausrichtung des Zapfventils bzw. des Zapfventilrohres 4 bei der Betankung des nicht dargestellten Flüssigkeitsbehälters Rechung.

Das Zapfventilrohr 4 umfasst eine Fühlerleitung 10, die in eine Fühlerdüse 11 mündet. Die Fühlerdüse 11 wird langläufig auch als sogenannte Schnüffelbohrung bezeichnet. Die Fühlerleitung 10 und die Fühlerdüse 11 sind Bestandteil einer Betankungs- Unterbrechungsautomatik des Zapfventils. Bei einer solchen Betankungs- Unterbrechungsautomatik erzeugt die aus dem Zapfventil auslaufende Flüssigkeit einen Unterdruck, der über die Fühlerleitung 10 detektiert wird. Solange die Fühlerdüse 11 und die Fühlerleitung 10 geöffnet sind, kann Flüssigkeit aus dem Zapfventil abgegeben wird. Werden die Fühlerleitungen 10 und/oder die Fühlerdüse 11 verschlossen, so wird dadurch die Betankungs-Unterbrechungsautomatik des Zapfventils betätigt und der Betankungsvorgang wird beendet.

Wie dies insbesondere der schematischen Darstellung in Figur 2 zu entnehmen ist, ist in der Fühlerleitung 10 ein federbetätigter Ventilkörper 12 vorgesehen, der magnetisierbar ist bzw. der ferromagnetisch ist. Solange der Ventilkörper 12 durch eine Feder 13 in einem Ventilsitz 14 in der Fühlerleitung 10 gehalten wird, kann über die Fühlerleitung 10 kein Unterdruck aufgebaut werden, sodass ein etwa eingeleiteter Betankungsvorgang von der Betankungs-Unterbrechungsautomatik des Zapfventils unterbrochen bzw. nicht freigegeben wird.

Wie dies ebenfalls in Figur 2 schematisch dargestellt ist, ist wenigstens ein Elektromagnet 8 parallel zur Erstreckung des Zapfventilrohres 4 am Umfang des Mundlochstutzenabschnitts 2 so angeordnet, dass die elektromagnetischen Feldlinien des Elektromagneten 8 den Ventilkörper 12 bei Einführen des Zapfventilrohrs 4 in den Mundlochstutzenabschnitt 2 aus dem Ventilsitz 14 heben.

Solange der oder die Elektromagnete 8 bestromt sind, wird das Magnetfeld aufrechterhalten und der Ventilkörper 12 in einer geöffneten Stellung gehalten.

Der oder die Elektromagnete 8 werden über einen von der Bordelektronik des Kraftfahrzeugs gesteuerten Schaltstromkreis energetisiert bzw. bestromt. Die Aktivierung eines oder mehrer Elektromagnete 8 erfolgt unmittelbar vor Einleitung eines Betankungsvorgangs, beispielsweise beim Öffnen einer Tankklappe oder beim Einführen des Zapfventilrohres 4 in den Mundlochstutzenabschnitt 2. Die Betätigung kann beispielsweise durch einen von dem Zapfventilrohr 4 betätigten mechanischen Schalter erfolgen, der in den Querschnitt des Mundlochstutzenabschnitts zwar hineinragt.

Eine Unterbrechung des Betankungsvorgangs kann dann über eine Unterbrechung des Schaltstromkreises des oder der Elektromagnete 8 erfolgen, beispielsweise aufgrund eines Füllstandsgebersignals eines in dem Flüssigkeitsbehälter angeordneten Füllstandsgebers. Die Unterbrechung des Schaltstromkreises hat zu Folge, dass das von den Elektromagneten 8 induzierte Magnetfeld sofort zusammenbricht und der Ventilkörper 12 in den Ventilsitz 14 zurückfällt bzw. von der Feder 13 in den Ventilsitz 14 zurückgedrückt wird. Dadurch wird die Betankungs-Unterbrechungsautomatik des Zapfventils aktiviert und der Betankungsvorgang ist aktiv beendet.

Die Elektromagnete 8 können in beliebiger Anzahl gleichmäßig über den Durchmesser des Mundlochstutzenabschnitts 2 auf einer Höhe verteilt angeordnet sein. Die Höhe innerhalb des Mundlochstutzenabschnitts 2 ist zweckmäßigerweise in Abhängigkeit des Ventilkörpers 12 innerhalb des Zapfventilrohrs 4 gewählt.

Da mit zunehmender Entfernung die durch die Elektromagneten 8 induzierte Feldstärke überproportional abnimmt, ist es sinnvoll und zweckmäßig, die Elektromagnete am Innenumfang des Mundlochstutzenabschnitts 2 bzw. des Mundlochstutzengehäuses 9 anzuordnen.

Grundsätzlich können die Elektromagnete 8 schwimmend, d. h. über einen gewissen Winkelumfang frei beweglich am Innenumfang des Mundlochstutzenabschnitts 2 angeordnet sein, sodass eine automatische Ausrichtung der Elektromagnete in Abhängigkeit von der Lage des Ventilkörpers 12 innerhalb des Mundlochstutzenabschnitts 2 erfolgen kann. Somit ist dann sichergestellt, dass der Abschaltvorgang aktiv auch eingeleitet werden kann, wenn das Zapfventilrohr 4 nicht exakt ausgerichtet in den Mundlochstutzenabschnitt 2 des Einfüllstutzens 1 eingeführt wird.

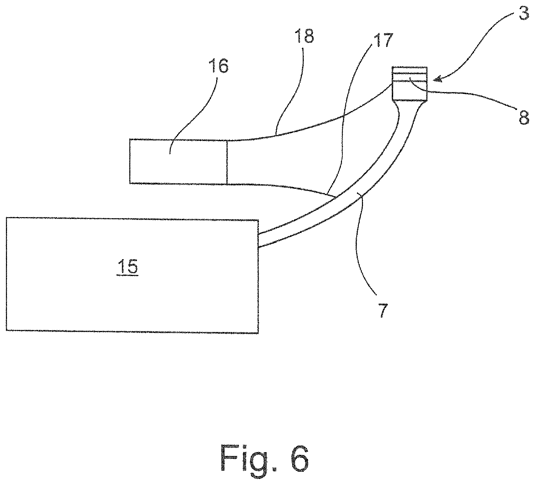

Figur 6 zeigt einen Flüssigkeitsbehälter 15 mit einem Einfüllstutzen 1 gemäß der Erfindung. Der Einfüllstutzen 1 ist Teil eines Einfüllkanals des Flüssigkeitsbehälters 15, der durch das Einfüllrohr 7 definiert wird. In dem Einfüllrohr 7 ist ein Qualitätssensor 17 angeordnet, der an einen Steuereingang der Steuereinrichtung 16 angeschlossen ist. Eine Steuerleitung 18 ist von einem Schaltausgang der Steuereinrichtung 16 zu dem Elektromagneten 8 im Einfüllstutzen 1 geführt. Wenn der Qualitätssensor 17 eine Flüssigkeit detektiert, die nicht zur Betankung vorgesehen ist, so wird eine Unterbrechung des Schaltstromkreiss bewirkt und ein Stromfluss über die Steuerleitung 18 zu dem Elektromagneten 8 wird unterbrochen.
Wie dies eingangs bereits dargelegt wurde, kann die Steuereinrichtung 17 mehrere Steuereingänge umfassen und Steuersignale beispielsweise von einem Füllstandsgeber innerhalb des Flüssigkeitsbehälters 15 erhalten.

### Bezugszeichenliste

- 1.: Einfüllstutzen
- 2.: Mundlochstutzenabschnitt
- 3.: Mundloch
- 4.: Zapfventilrohr
- 5.: Führungstrichter
- 6.: Auslauf
- 7.: Einfüllrohr
- 8.: Elektromagnete
- 9.: Mundlochstutzengehäuse
- 10.: Fühlerleitung
- 11.: Fühlerdüse
- 12.: Ventilkörper
- 13.: Feder
- 14.: Ventilsitz
- 15.: Flüssigkeitsbehälter
- 16.: Steuereinrichtung
- 17.: Qualitätssensor
- 18.: Steuerleitung

## Patentansprüche

1. Einfüllstutzen (1) für einen Flüssigkeitsbehälter eines Kraftfahrzeuges, der wenigstens einen Teil eines Einfüllkanals des Flüssigkeitsbehälters bildet und der einen Mundlochstutzenabschnitt (2) mit einem Mundloch (3) zur Aufnahme eines Zapfventils aufweist, **dadurch gekennzeichnet, dass** der Mundlochstutzenabschnitt (2) eine Schalteinrichtung zur Betätigung einer Betankungs- Unterbrechungsautomatik an einem in den Mundlochstutzenabschnitt (2) eingeführten Zapfventil im Sinne einer Unterbrechung des Betankungsvorgangs aufweist, wobei die Schalteinrichtung über einen elektrischen Schaltstromkreis betätigbar ist.

2. Einfüllstutzen nach Anspruch 1, **dadurch gekennzeichnet, dass** die Schalteinrichtung wenigstens einen Elektromagneten (8) umfasst, der am Umfang des Mundlochstutzenabschnitts (2) so angeordnet ist, dass das von diesem erzeugte Magnetfeld sich in den Querschnitt des Mundlochstutzenabschnitts (2) im Bereich der Umschließung des Zapfventils erstreckt, sodass dieses auf einen ferromagnetischen Ventilkörper (12) eines Fehlbetankungsschutzes an dem Zapfventil betätigend einwirken kann.

3. Einfüllstutzen nach einem der Ansprüche 1 oder 2, **dadurch gekennzeichnet, dass** der Schaltstromkreis bei einer Einleitung des Betankungsvorgangs geschlossen ist.

4. Einfüllstutzen nach Anspruch 3, **dadurch gekennzeichnet, dass** ein mechanischer Schalter zum Schließen des Schaltstromkreises bei Einleitung des Betankungsvorgangs vorgesehen ist

5. Einfüllstutzen nach einem der Ansprüche 1 bis 4, **dadurch gekennzeichnet, dass** eine Steuereinrichtung zur Unterbrechung des Schaltstromkreises in Abhängigkeit eines Füllstandsignals und/oder in Abhängigkeit eines Behälterinnendrucksignals und/oder in Abhängigkeit eines bei der Betankung ermittelten Füllvolumens vorgesehen ist.

6. Einfüllstutzen nach einem der Ansprüche 1 bis 5, **dadurch gekennzeichnet, dass** die Schalteinrichtung mehrere am Umfang des Mundlochstutzenabschnitts (2) angeordnete Elektromagnete (8) umfasst, die gleichzeitig bestrombar sind.

7. Übertankungs- und Fehlbetankungsschutz für einen Flüssigkeitsbehälter eines Kraftfahrzeugs, welcher zur Betankung mittels eines automatisch abschaltenden Zapfventils mit einer Betankungs- Unterbrechungsautomatik ausgebildet ist, umfassend eine behälterseitige Sicherungskomponente und eine säulenseitige Sicherungskomponente an dem Zapfventil, wobei als behälterseitige Sicherungskomponente wenigstens eine an einem Einfüllstutzen (1) des Flüssigkeitsbehälters vorgesehene Schalteinrichtung und als Sicherungskomponente an den Zapfventil ein in der Schalteinrichtung steuerbares Ventil vorgesehen ist, wobei als Schalteinrichtung wenigstens ein schaltbarer Elektromagnet (8) vorgesehen ist, der Elektromagnet (8) am Umfang des Einfüllstutzens (1) so angeordnet ist, dass das von diesem bei einer Betätigung erzeugte Magnetfeld sich in den Querschnitt des Einfüllstutzens (1) im Bereich einer Einschublänge für das Zapfventil erstreckt, wobei das Ventil einen ferromagnetischen Ventilkörper (12) aufweist, der in einer ersten Schaltstellung eine Fühlerleitung (10) im Zapfventil verschließt und diese in einer zweiten Schaltstellung freigibt, und wobei eine Betätigung des Elektromagneten (8) im Sinne einer Bestromung über einen Schaltstromkreis den Ventilkörper (12) in der zweiten, geöffneten Stellung hält.

8. Verfahren zur Steuerung einer Betankungs- Unterbrechungsautomatik an einem Zapfventil bei der Betankung eines Flüssigkeitsbehälters in einem Kraftfahrzeug mittels wenigstens einer in einem Einfüllstutzen (1) des Flüssigkeitsbehälters vorgesehenen Schalteinrichtung, die betätigend auf eine Betankungs- Unterbrechungsautomatik eines in den Einfüllstutzen (1) eingeführten Zapfventils einwirkt, wobei die Schalteinrichtung gesteuert wird in Abhängigkeit von einem oder mehreren Steuersignalen, die ausgewählt sind aus einer Gruppe umfassend ein Füllstandsgebersignal, ein Drucksignal eines Drucksensors innerhalb des Flüssigkeitsbehälters oder ein gewähltes oder vorgegebenes oder abgeleitetes Füllmengensignal.

9. Verfahren nach Anspruch 8 unter Verwendung eines Einfüllstutzens (1) oder einer Übertankungs- und Fehlbetankungsschutzeinrichtung nach einem der vorherigen Ansprüche.

## Claims

1. Filler neck (1) for a liquid container of a motor vehicle, which filler neck forms at least a part of a filler duct of the liquid container and which filler neck has a mouth connector portion (2) with a mouth (3) for receiving a filling nozzle, **characterized in that** the mouth connector portion (2) has a switching device for actuating, for the purposes of interrupting the tank filling process, an automatic tank filling interruption facility on a filling nozzle inserted into the mouth connector portion (2), wherein the switching device is actuatable by means of an electrical switching current circuit.

2. Filler neck according to Claim 1, **characterized in that** the switching device comprises at least one electromagnetic (8) which is arranged on the circumference of the mouth connector portion (2) such that the magnetic field generated by said at least one electromagnet extends into the cross section of the mouth connector portion (2) in the region in which it surrounds the filling nozzle, such that said magnetic field can act with an actuating action on a ferromagnetic valve body (12) of a tank misfilling inhibitor on the filling nozzle.

3. Filler neck according to either of Claims 1 and 2, **characterized in that** the switching current circuit is closed when the tank filling process is initiated.

4. Filler neck according to Claim 3, **characterized in that** a mechanical switch is provided for closing the electrical current circuit when the tank filling process is initiated.

5. Filler neck according to any of Claims 1 to 4, **characterized in that** a control device is provided for interrupting the switching current circuit in a manner dependent on a fill level signal and/or in a manner dependent on a container internal pressure signal and/or in a manner dependent on a fill volume determined during the tank filling process.

6. Filler neck according to any of Claims 1 to 5, **characterized in that** the switching device comprises multiple electromagnets (8) which are arranged on the circumference of the mouth connector portion (2) and which are electrically energizable simultaneously.

7. Tank overfilling and tank misfilling inhibitor for a liquid container of a motor vehicle, which liquid container is designed for tank filling by means of an automatically deactivating filling nozzle with an automatic tank filling interruption facility, comprising a container-side safety component and a filling-pump-side safety component on the filling nozzle, wherein, as container-side safety component, there is provided at least one switching device provided on a filler neck (1) of the liquid container, and as safety component on the filling nozzle, there is provided a valve which is controllable in the switching device, wherein, as switching device, there is provided at least one switchable electromagnet (8), the electromagnet (8) is arranged on the circumference of the filler neck (1) such that the magnetic field generated by said electromagnet during an actuation extends into the cross section of the filler neck (1) in the region of an inserted length of the filling nozzle, wherein the valve has a ferromagnetic valve body (12) which, in a first switching position, closes off a sensor line (10) in the filling nozzle and, in a second switching position, opens up said sensor line, and wherein an actuation of the electromagnet (8) in the sense of an electrical energization by means of a switching current circuit holds the valve body (12) in the second, opened position.

8. Method for controlling an automatic tank filling interruption facility on a filling nozzle during the tank filling of a liquid container in a motor vehicle by means of at least one switching device provided in a filler neck (1) of the liquid container, which at least one switching device acts with an actuating action on an automatic tank filling interruption facility of a filling nozzle inserted into the filler neck (1), wherein the switching device is controlled in a manner dependent on one or more control signals selected from a group comprising a fill level sensor signal, a pressure signal from a pressure sensor within the liquid container, or a selected or predefined or derived fill quantity signal.

9. Method according to Claim 8 using a filler neck (1) or a tank overfilling and tank misfilling inhibitor according to any of the preceding claims.

## Revendications

1. Tubulure de remplissage (1) pour un récipient à liquide de véhicule automobile, la tubulure formant au moins une partie du canal de remplissage du récipient à liquide et présentant une partie (2) de tubulure de trou d'embouchure présentant un trou d'embouchure (3) qui reprend une soupape de pistolet,
**caractérisée en ce que**
la partie (2) de tubulure de trou d'embouchure présente un dispositif de commutation actionnant d'un automate d'interruption du remplissage prévu sur une soupape de pistolet insérée dans la partie (2) de tubulure de trou d'embouchure en vue d'interrompre l'opération de remplissage,
le dispositif de commutation pouvant être actionné par l'intermédiaire d'un circuit de courant électrique de commutation.

2. Tubulure de remplissage selon la revendication 1,
**caractérisée en ce que** le dispositif de commutation comporte au moins un électroaimant (8) disposé à la périphérie de la partie (2) de tubulure de trou d'embouchure de telle sorte que le champ magnétique qu'il crée s'étende dans la section transversale de la partie (2) de tubulure de trou d'embouchure au niveau de la fermeture de la soupape de pistolet de telle sorte qu'il puisse agir sur un corps ferromagnétique (12) de soupape d'une protection contre les défauts de remplissage prévue sur la soupape de pistolet.

3. Tubulure de remplissage selon l'une des revendications 1 ou 2, **caractérisée en ce que** le circuit de courant de commutation est fermé lors du lancement d'une opération de remplissage.

4. Tubulure de remplissage selon la revendication 3, **caractérisée en ce qu'**un commutateur mécanique est prévu pour fermer le circuit de courant de commutation lors du lancement de l'opération de remplissage.

5. Tubulure de remplissage selon l'une des revendications 1 à 4, **caractérisée en ce qu'**un dispositif de commande qui interrompt le circuit de courant de commutation en fonction d'un signal de niveau, en fonction d'un signal de pression intérieure dans le récipient et/ou en fonction d'un volume de remplissage déterminé lors du remplissage est prévu.

6. Tubulure de remplissage selon l'une des revendications 1 à 5, **caractérisée en ce que** le dispositif de commutation comporte plusieurs électroaimants (8) disposés à la périphérie de la partie (2) de tubulure de trou d'embouchure et pouvant être alimentés en courant simultanément.

7. Protection contre le remplissage excessif et les erreurs de remplissage d'un récipient à liquide de véhicule automobile configuré pour être rempli au moyen d'une soupape de pistolet à débranchement automatique, à l'aide d'un automate d'interruption du remplissage, la protection comprenant un composant de protection situé sur le récipient et un composant de protection situé sur la colonne de la soupape de pistolet, au moins un dispositif de commutation prévu sur une tubulure de remplissage (1) du récipient à liquide étant prévu sur le récipient comme composant de protection et une soupape asservie au dispositif de commutation étant prévue sur la soupape de pistolet comme composant de protection,
au moins un électroaimant asservi (8) étant prévu comme dispositif de commutation, l'électroaimant (8) étant disposé à la périphérie de la tubulure de remplissage (1) de telle sorte que le champ magnétique qu'il produit lors d'un actionnement s'étende dans la section transversale de la tubulure de remplissage (1) au niveau de la longueur insérée de la soupape de pistolet,
la soupape présentant un corps (12) ferromagnétique de soupape qui ferme un conduit de sonde (10) prévu dans la soupape de pistolet dans une première position de commutation et le libère dans une deuxième position de commutation, un actionnement de l'électroaimant (8) en vue d'une alimentation en courant maintenant par l'intermédiaire d'un circuit de courant de commutation le corps de soupape (12) dans la deuxième position, à savoir la position ouverte.

8. Procédé de commande d'un automate d'interruption du remplissage prévu sur une soupape de pistolet lors du remplissage d'un récipient à liquide d'un véhicule automobile, au moyen d'au moins un dispositif de commutation prévu dans une tubulure de remplissage (1) du récipient à liquide et agissant sur un automate d'interruption du remplissage d'une soupape de pistolet insérée dans la tubulure de remplissage (1) de manière à l'actionner, le dispositif de commutation étant commandé en fonction d'un ou plusieurs signaux de commande sélectionnés dans un ensemble comprenant un signal de détecteur de niveau, un signal de pression d'un capteur de pression prévu à l'intérieur du récipient à liquide ou un signal de quantité de remplissage sélectionnée, prédéterminée ou dérivée.

9. Procédé selon la revendication 8, recourant à une tubulure de remplissage (1) ou à un dispositif de protection contre le remplissage excessif et les erreurs de remplissage selon l'une des revendications précédentes.
